# EUROPÄISCHE PATENTSCHRIFT

(11) **EP 0 652 075 B1**
(45) Veröffentlichungstag und Bekanntmachung des Hinweises auf die Patenterteilung: **12.07.2000**
(21) Anmeldenummer: 94810256.1
(22) Anmeldetag: 03.05.1994
(51) Int. Cl.: B23Q 3/08, B23Q 1/01, B25B 11/00, B23Q 1/26, B23Q 1/38

(54) **Vorrichtung zum Bearbeiten von Werkstücken**
Device for the machining of workpieces
Dispositif d'usinage de pièces

(30) Priorität: 14.09.1993 CH 276693
(43) Veröffentlichungstag der Anmeldung: 10.05.1995
(60) Teilanmeldung: 99117846.8
(73) Patentinhaber: EDUARD HUBER MANAGEMENT AG, CH-8212 Neuhausen am Rheinfall (CH)
(72) Erfinder: Huber, Eduard, CH-8212 Neuhausen am Rheinfall (CH)

(56) Entgegenhaltungen:
- EP-A- 0 528 052
- DE-A- 1 477 416
- DE-A- 2 346 633
- DE-A- 4 132 311
- DE-A- 4 237 169
- DE-C- 3 838 988
- DE-U- 8 703 223
- FR-A- 2 050 688
- FR-A- 2 473 925
- GB-A- 1 059 285
- GB-A- 2 113 595
- GB-A- 2 168 915
- US-A- 2 959 452
- US-A- 3 495 492
- US-A- 4 763 420
- WERKSTATT UND BETRIEB, Bd. 94, Nr. 9, September 1961 MUNCHEN DE, Seite 693 'Neuzeitliche Führungselemente'
- PATENT ABSTRACTS OF JAPAN vol. 9 no. 235 (M-415) ,21.September 1985 & JP-A-60 090646 (FANUC KK) 21.Mai 1985,

## Beschreibung

Die Erfindung betrifft eine Vorrichtung zum Bearbeiten von Werkstücken, insbesondere mit 2 ½ und 3D-Geometrien.

Aus der EP-A-0 528 052 ist eine Werkzeugmaschine bekannt, die ein Untergestell, einen als Portal ausgebildeten Werkzeugständer und einen Support mit einer Spindel aufweist, an welcher das Werkstück angeordnet ist. Im Untergestell ist eine Einrichtung zum Wegführen des Werkstücke vorgesehen. Der Werkzeugständer ist auf Schienen abgestützt, die auf der Oberseite des Untergestells angeordnet sind und mittels einer Antriebseinrichtung in der z-Achse verfahrbar, die im Gestell angeordnet ist. Der Support ist auf der Oberseite des Untergestells befestigt oder verfahrbar angeordnet. Bei dieser Maschine wird das Werkzeug in zwei Richtungen und das Werkstück in einer zu den anderen rechtwinkligen Richtung dritten Richtung verschoben.

Die Nachteile dieser Werkzeugmaschine sind im wesentlichen darin zu sehen, dass das zu bearbeitende Werkstück freitragend angeordnet ist und während der Bearbeitung bewegt wird und dass der Werkzeugständer auf Schienen verfahrbar angeordnet ist. Durch die freitragende Anordnung und Bewegung des Werkstückes werden die Bearbeitungsmöglichkeiten wesentlich eingeschränkt und durch den direkten Kontakt zwischen der Schiene und dem Werkzeugständer treten Schwingungen auf, welche zu Lasten der Bearbeitungsgenauigkeit als auch der Arbeitsleistung der Maschine gehen.

Aus der DE-A-23 46 633 ist eine Führung für relativ zueinander bewegbare Maschinenteile bekannt, die eine aerostatische Führung und eine mechanische Gegenführung aufweist. Mit dieser mechanische Gegenführung mittels Rollen ist eine schwingungsfreie Führung der Maschinenteile nicht möglich.

Der Erfindung, wie sie in dem unabhängigen Anspuch 1 gekennzeichnet ist, löst die Aufgabe eine Vorrichtung zum Bearbeiten von , Werkstücken zu verbessern.

Mit, Naturstein oder Kunststoff für den Werkzeugständer und/oder den Arbeitstisch kommen sehr schwingungsarme und einen geringen Wärmeausdehnungskoeffizient aufweisende Materialien zur Anwendung, die zudem mittels eines Fluidlagers entkoppelt sind, sodass der Einfluss der durch die Bearbeitung verursachten Wärmeausdehnung und Schwingungen beseitigt ist. Werkstücke unterschiedlichen Materials, wie Metalle, z.B. Leicht- und Buntmetalle, Nichtmetalle, z.B. Kunststoff und Graphit, Naturwerkstoffe, z.B. Holz oder dgl. lassen sich mit hoher Genauigkeit und hohen Arbeitsgeschwindigkeiten bearbeiten. Die Vorteile des Fluidlagers bestehen in dem fast Fehlen von Reibung und der sehr geringen Leistung für die Vorschubbewegung. Die bei dieser Anwendung dem Fluidlager nachgesagte fehlende Genauigkeit hat sich als ungerechtfertigtes Vorurteil erwiesen. Mit der Vorrichtung werden bei allen spanabhebenden Bearbeitungen hohen Abtragsleistungen erreicht, wird z.B. beim Fräsen und Schleifen Material mit bis zu dreidimensionalen Konturen und Freiformflächen (Elektroden, Modellbau, usw.) oder dünnwandige Teile mit hohen Vorschubgeschwindigkeiten bearbeitet.

Vorteilhafte Ausführungsformen der Erfindung ergeben sich aus den abhängigen Ansprüchen.

Im folgenden wird die Erfindung anhand der beiliegenden Zeichnungen erläutert.

Es zeigen:
- Fig. 1: eine schematisch dargestellte Ansicht einer erfindungsgemässen Vorrichtung;
- Fig. 2: eine schematisch dargestellte Ansicht einer Lagereinrichtung;
- Fig. 3: eine Einzelheit "A" in Fig. 2;
- Fig. 4: einen Ausschnitt des Arbeitstisches;
- Fig. 5: eine Draufsicht eines Abschnittes der Spannfläche des Arbeitstisches;
- Fig. 6: einen Werkzeughalter im Schnitt und
- Fig. 7: eine Einrichtung zum Einstellen des Werkzeuges im Schnitt.

Die Vorrichtung weist ein Gestell 1, einen als Werkstückhalter ausgebildeten Arbeitstisch 2, der auf dem Gestell befestigt und ein- oder mehrteilig ausgebildet ist, einen als Portal ausgebildeten Werkzeugständer 3, eine Lagereinrichtung 4, eine Bearbeitungseinrichtung 5, eine Vakuumspanneinrichtung 6, sowie jeweils eine Speisequelle 7 und 8 für die Lagereinrichtung und Spanneinrichtung sowie eine Steuereinrichtung 9 auf.

Der Werkzeugständer 3 in an gegenüberliegenden Seiten am quaderförmigen Arbeitstisch 2 in der x-Achse verschiebbar angeordnet. Der Werkzeugständer hat zwei Säulen 11, in welche die Lagereinrichtung 4 angeordnet ist und einen Träger 12, der aus zwei Platten besteht. Der Werkzeugständer ist ein- oder mehrteilig ausgebildet.

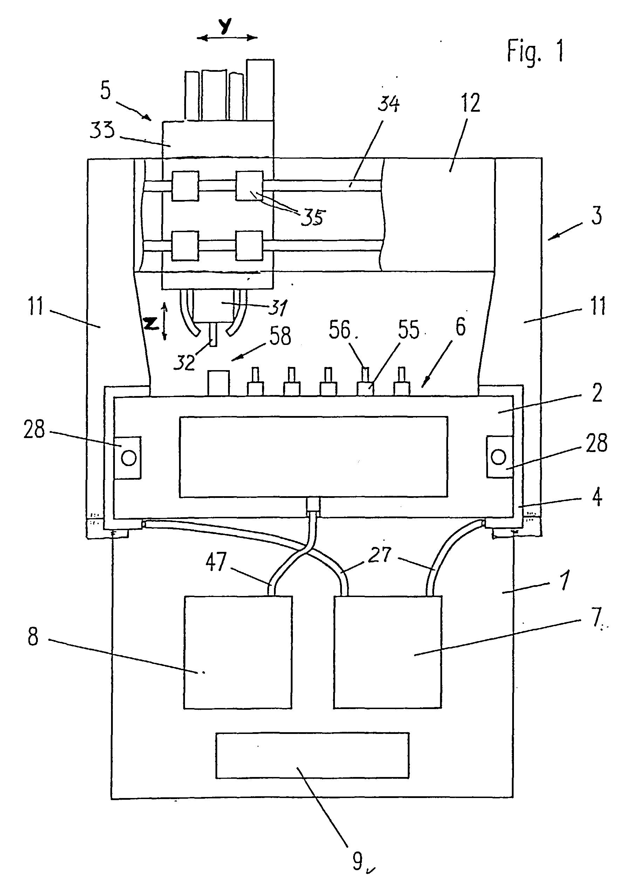

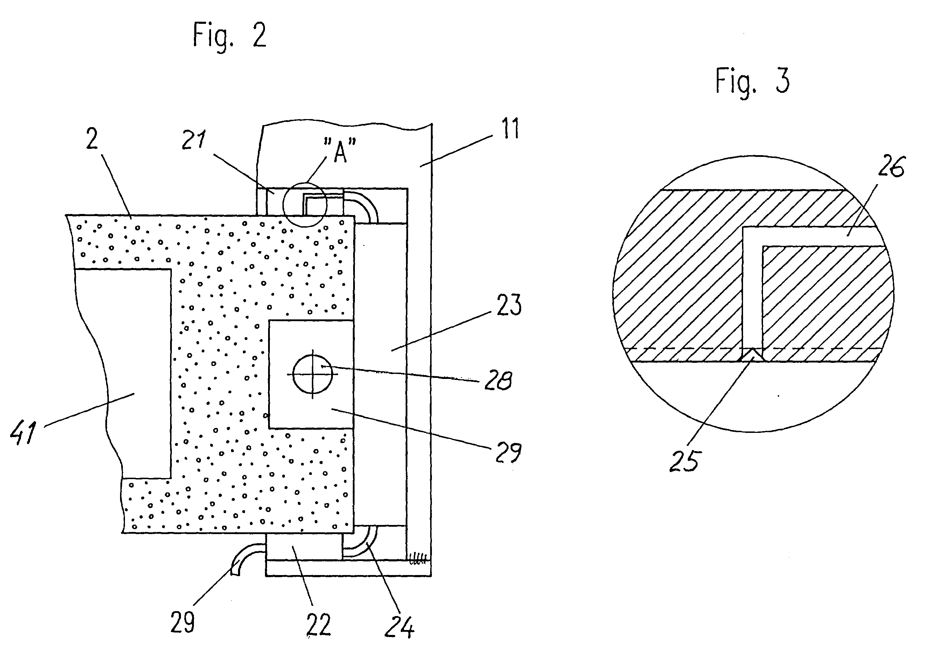

Die Lagereinrichtung 4 ist ein Fluidlager mit einem Lagermedium aus Wasser, Oel oder Luft, das nachfolgend anhand der Figuren 2 und 3 beschrieben wird. Die Luftlagereinrichtung 4 besteht aus einen oberen und unteren Lagerteil 21, 22 und einen seitlichen Lagerteil 23, die über Verbindungsleitungen 24 kommunizieren. In den Lagerteilen 21, 22, 23 sind Rillen 25 ausgebildet, die mit Vorteil rechtwinklig zueinander angeordnet sind. In den Rillen 25 mündet ein Speisekanal 26 für die Luft, der zur Seite des Lagerteiles herausgeführt ist. Die Luftlagereinrichtungen sind über Rohr oder Schlauchleitungen 27 mit der Speisequelle 7 verbunden (Fig. 1).

Der Werkzeugständer 3 ist von zwei Rollengewinderieben 28 angetrieben, die jeweils in einer rinnenförmigen Ausnehmung 29 im Arbeitstisch 2 untergebracht sind und von einer Antriebsvorrichtung (nicht dargestellt) synchron angetrieben werden. Die Synchronisation kann auf mechanischem oder elektrischem Wege erfolgen.

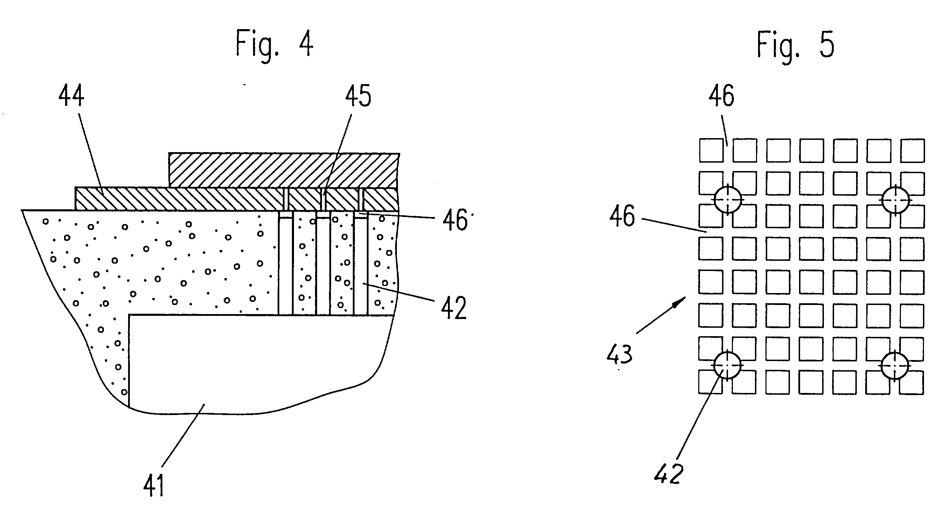

Die Vakuumspanneinrichtung 6 umfasst eine Kaverne 41, die im Arbeitstisch 2 ausgebildet ist, eine Anzahl von Durchgangslöchern 42, welche die Kaverne mit einem auf der Oberseite des Arbeitstisches 2 ausgebildeten Aufspannareal 43 (Fig. 5) verbindet und ein plattenförmiges Organ 44, das Durchgangslöchern 45 aufweist und das Aufspannareal abdeckt. Die Durchgangslöcher 42 sind so angeordnet, dass sie im Schnittpunkt des Rasters 46 ausmünden. Die Durchgangslöcher im Arbeitstisch 2 und im Organ 44 sind im gleichen Raster angeordnet. Wie die Fig. 5 zeigt wird das Aufspannareal 43 durch Rillen 46 gebildet, die rechtwinklig zueinander angeordnet sind. Ferner ist die Spanneinrichtung über eine Rohr- oder Schlauchleitung 47 mit der Speisequelle 8 verbunden. Es wird darauf hingewiesen, dass anstelle der rechtwinklig zueinander angeordneten Rillen die Rillen erfindungsgemäss in einem schiefwinkligem Raster, in Reihen oder kreisförmig angeordnet werden können. Anstelle der Vakuumspanneinrichtung kann erfindungsgemäss eine mit Kältemittel gespeiste Einrichtung angewendet werden, die in den Arbeitstisch eingebaut ist.

Die Bearbeitungseinrichtung 5 umfasst einen elektrischen Antrieb 31, dessen Drehzahl stufenlos regelbar ist und eine Spannvorrichtung 32 für ein Werkzeug, die einen automatischen Werkzeugwechsel erlaubt sowie eine Vorschubanordnung 33 für die Bewegung in der y- und z-Achse, die im Träger 12 angeordnet ist. Die Vorschubanordnung enthält einen ersten Schlitten, der am Träger 12 gelagert ist und einen zweiten Schlitten (nicht dargestellt), der im ersten Schlitten gelagert ist und den Antrieb 31 trägt. Die Schlitten sind in den vorgenannten Lagern gelagert. Eine Antriebseinrichtung mit einem Rollengewindetrieb 34, mit Gewindeschlössern 35 und mit einer nicht dargestellten Antriebseinheit ist am ersten Schlitten montiert, um die Bearbeitungseinrichtung 5 im Träger, d.h. entlang der y-Achse vorzuschieben.

Anstelle der Rollengewindetriebe können Kugelgewindetriebe oder Linearmotoren angewendet werden. Es ist auch möglich diese zu kombinieren.

Wie die Fig. 1 zeigt, sind auf der Oberseite des Arbeitstisches 2 eine Anzahl von Werkzeughaltern 55 für verschiedene Werkzeuge 56 vorgesehen, die ausserhalb des Spannbereiches reihenförmig angeordnet sind. Die Werkzeughalter können auf einem Rundtisch (nicht dargestellt), der im Arbeitstisch drehbar angeordnet ist oder am Träger 12 vorgesehen werden.

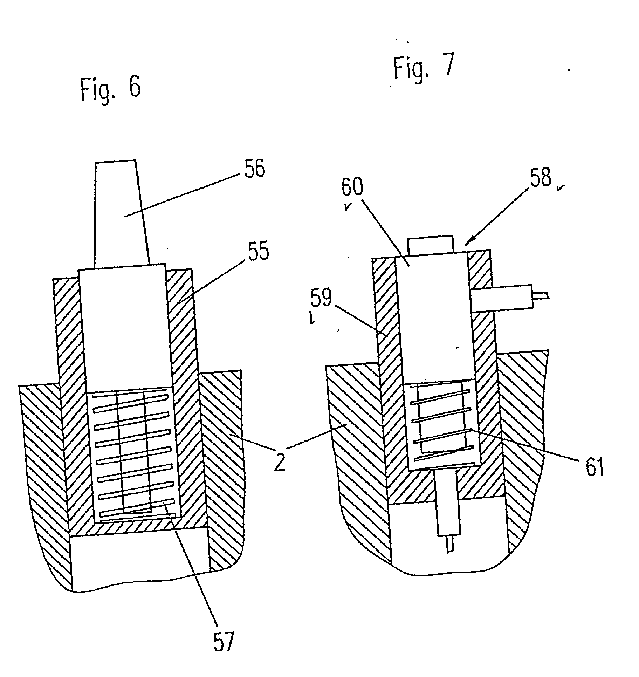

Wie die Fig. 6 zeigt, ist der Werkzeughalter 55 als Büchse ausgebildet, in welche eine Schraubenfeder 57 angeordnet ist. Das Werkzeug 56 liegt auf der Schraubenfeder 57 auf, um eine Beschädigung des Werkzeuges bei der Aufnahme durch die Spannvorrichtung zu verhindern.

Da die Werkzeugaufnahme durch die Bearbeitungseinrichtung durch die Steuereinrichtung 9 gesteuert werden kann und folglich automatisch erfolgen kann ist eine Einrichtung 58 zum Einstellen des Werkzeuges 56 im Arbeitstisch 2 vorgesehen. Diese Einrichtung 58 weist einen Halter 59, einen Signalgeber 60, der im Halter beweglich angeordnet ist und eine Schraubenfeder 61 auf, um den Signalgeber abzustützen.

Die Steuervorrichtung enthält eine CNC-Steuereinheit, die für eine Steuerung der Bearbeitungseinrichtung in mindestens zwei Achsrichtungen nach geltenden Vorschriften programmierbar ist. Die Programmierung kann manuell von einem Terminal an der Vorrichtung bzw. automatisch mittels CAD, CAM oder CIM oder über ein Netzwerk erfolgen.

## Patentansprüche

1. Vorrichtung zum Bearbeiten von Werkstücken, welche Vorrichtung ein Gestell (1), einen als Portal ausgebildeten Werkzeugständer (3), der in der x-Achse verschiebbar ist, eine Bearbeitungseinrichtung (5), die eine Vorschubanordnung aufweist, um die Bearbeitungseinrichtung in der y- und z-Achse zu verschieben, einen Werkstückhalter mit einer Spanneinrichtung (6), um das zu bearbeitende Werkstück zu halten und mit einer Steuereinrichtung (9), um die Vorrichtung nach einem vorbestimmten Programm zu steuern, dadurch gekennzeichnet, dass der Werkstückhalter ein quaderförmiger Arbeitstisch (2) ist, der am Gestell (1) befestigt ist, dass der Werkzeugstander (3) am Arbeitstisch (2) verschiebbar angeordnet ist, dass der Werkzeugständer (3) und/oder der Arbeitstisch (2) aus Naturstein oder Kunststoff besteht, dass eine Fluid-Lagereinrichtung (4) im Portalständer des Werkzeugträgers (3) angeordnet ist, um den Werkzeugständer am Arbeitstisch zu lagern, dass die Bearbeitungseinrichtung (5) mit der Vorschubanordnung im Träger (12) des Werkzeugständers (3) angeordnet ist, dass die Spanneinrichtung (6) im Arbeitstisch vorgesehen ist, um das zu bearbeitende Werkstück auf der Oberfläche des Arbeitstisches zu halten und dass eine erste Einrichtung (7) zur Speisung der Fluid-Lagereinrichtung (4) und eine zweite Einrichtung (8) zur Erzeugung der Spannkraft im Gestell (1) angeordnet sind.

2. Vorrichtung nach Anspruch 1, dadurch gekennzeichnet, dass der Arbeitstisch (2) und/oder der Werkzeugständer (3) ein- oder mehrteilig ausgebildet ist.

3. Vorrichtung nach Anspruch 1, dadurch gekennzeichnet, dass die Lagereinrichtung (4) ein aerostatisches Lager oder ein hydrostatisches Lager ist.

## Claims

1. A device for machining workpieces, which comprises a stand (1), a tool pillar (3) constructed as a gantry, which is displaceable in the X-axis, a machining device (5), which has a feed arrangement to move the machining device in the y and x axis, a tool holder having a clamping device (6) to hold the workpiece to be machined and with a control device (9) to control the device according to a predetermined program,
**characterised in that** the workpiece holder is a cuboid-shaped workbench (2) attached to the stand (1),
**in that** the tool pillar (3) is displaceably disposed on the workbench (2),
**in that** the tool pillar (3) and/or the workbench (2) are made from natural stone or plastic material,
**in that** a fluid bearing device (4) is provided in the gantry stand of the tool pillar (3) to store the tool pillar on the workbench,
**in that** the machining device (5) with the feed arrangement is disposed in the support (12) of the tool pillar (3),
**in that** the clamping device (6) is provided in the workbench in order to retain the workpiece to be machined on the surface of the workbench
**and in that** a first device (7) for feeding the fluid bearing device (4) and a second device (8) for producing the clamping device are disposed in the stand (1).

2. A device according to Claim 1,
**characterised in that** the workbench (2) and/or the tool pillar(3) has a single-part or multi-part construction.

3. A device according to Claim 1,
**characterised in that** the bearing device (4) is an aerostatic bearing or a hydrostatic bearing.

## Revendications

1. Dispositif d'usinage de pièces, ledit dispositif comprenant un bâti (1), un support d'outil (3) configuré en portique et déplaçable suivant l'axe des x, un dispositif d'usinage (5) qui comporte un ensemble d'avance afin de déplacer le dispositif d'usinage suivant l'axe y et suivant l'axe z, un porte-pièce équipé d'un dispositif de fixation (6) afin de tenir la pièce à usiner, ainsi qu'un dispositif de commande (9) pour commander le dispositif suivant un programme prédéterminé, caractérisé en ce que le porte-pièce est une table de travail parallélépipédique (2) qui est fixée au bâti (1), en ce que le support d'outil (3) est disposé déplaçable sur la table de travail (2), en ce que le support d'outil (3) et/ou la table de travail (2) est en pierre naturelle ou en matière plastique, en ce qu'un dispositif de soutien fluidique (4) est disposé dans les montants du portique du porte-outil (3) afin de monter le support d'outil sur la table de travail, en ce que le dispositif d'usinage (5) est disposé avec l'ensemble d'avance dans la traverse (12) du support d'outil (3), en ce que le dispositif de fixation (6) est prévu dans la table de travail pour tenir la pièce à usiner sur la surface de la table de travail et en ce qu'un premier dispositif (7) d'alimentation du dispositif de soutien fluidique (4) et un deuxième dispositif (8) de génération de la force de fixation sont disposés dans le bâti (1).

2. Dispositif selon la revendication 1, caractérisé en ce que la table de travail (2) et/ou le support d'outil (3) est réalisé en une ou plusieurs pièces.

3. Dispositif selon la revendication 1, caractérisé en ce que le dispositif de soutien (4) est un coussinet aérostatique ou un coussinet hydrostatique.
